# EUROPEAN PATENT SPECIFICATION

(11) **EP 2 316 558 B1**
(45) Date of publication and mention of the grant of the patent: **20.08.2014**
(21) Application number: 10011305.9
(22) Date of filing: 21.12.2007
(51) Int. Cl.: B01D 53/90, B01D 53/94, C01C 1/02, F01N 3/20, H01M 8/06, H01M 8/22, H01M 8/04, B01D 53/02, B01D 53/86, C01C 1/00, B01D 53/04

(54) **Method and device for ammonia storage and delivery using in-situ re-saturation of a delivery unit**
Verfahren und Vorrichtung zur Speicherung und Abgabe von Ammoniak mit in-situ-Auffüllen der Abgabeeinheit
Procédé et dispositif de stockage et utilisation de matériaux de stockage d'ammoniac avec re-saturation in-situ de l'unité d'utilisation

(30) Priority: 22.12.2006 DE 102006061370; 23.05.2007 US 939631 P
(43) Date of publication of application: 04.05.2011
(62) Divisional of application: 07857189.0
(73) Proprietor: Amminex Emissions Technology A/S, 2860 Søborg (DK)
(72) Inventor: Johannessen, Tue, 2600 Glostrup (DK)
(74) Representative: Samson & Partner

(56) References cited:
- EP-A1- 1 388 648
- WO-A1-99/01205
- WO-A2-2005/091418
- WO-A2-2006/081824
- WO-A2-2006/131201
- US-A- 5 884 475

## Description

### BACKGROUND OF THE INVENTION

### Field of the Invention

This invention relates to a method and device for storing and generating of ammonia from storage materials capable of binding and releasing ammonia reversibly. In particular, the storage materials are solid metal ammine complexes capable of binding and releasing ammonia reversibly. The method and device may be used in the selective catalytic reduction of NOx.

### Description of the Related Art

As disclosed in applicant's co-pending application (WO2006012903) metal ammine salts can be used as a solid storage media for ammonia which in turn may be used as the reductant in selective catalytic reduction to reduce NOₓ emissions from automotive vehicles, boilers and furnaces. Thus, the metalammine salt constitutes a solid storage medium for ammonia, which represent a safe and practical option for storage and transportation of ammonia. This is advantageous compared with NOx removal using ammonia delivered as aqueous solution of urea or ammonia because the large fraction - typically more than 65% - of water is avoided. In particular, Mg(NH₃)Cl₂ represents an ammonia storage material characterized by a high degree of safety because the vapor pressure at room temperature is below 0.1 bar. It is also characterized by a high mass density of ammonia because Mg is a light metal. Applicant's co-pending application (WO2006081824) discloses further storage materials with a high, demonstrated volumetric capacity and method of making them.

International Patent Publication No. WO 99/01205 discloses a method and a device for selective catalytic NOx reduction in waste gases containing oxygen, using ammonia and a reduction catalyst. According to the method, gaseous ammonia is provided by heating a solid storage medium preferably being granulated material consisting of Ca(NH₃)₈Cl₂ or Sr(NH₃)₈Cl₂.

WO 99/01205 A1 discloses a method and a device for selective catalytic NOx reduction in waste gases containing oxygen by means of a reduction catalyst and ammonia as a reductant which may be provided by heating salts binding ammonia in the form of a complex. The device may comprise a buffer container for gaseous ammonia.

In WO 2006/08182 A2 a device is shown that comprises three containers each equipped with heating means and a valve and each containing an ammonia storage and delivery material. The individual containers are heated sequentially for release of ammonia, and the valve of the individual heated container is opened for the release thereof.

### SUMMARY OF THE INVENTION

The present invention is based on having a large container that has heating means and contains a metal ammine salt ammonia storage material and a smaller container that also contains a metal ammine salt ammonia storage material and has heating means in order to release ammonia wherein the two ammonia storage materials are the same materials. When the small container has been partially or fully degassed during a period of heating, e.g. while driving for say 1 hour, the unit is allowed to cool down to room temperature, which causes that a pressure gradient between the two storage containers is created. If the two containers have a connecting tube with an open/close valve in between, the smaller unit can absorb ammonia from the larger unit. The operation of the smaller heated container with the limited capacity is used periodically, and in between use, the smaller container may be passively re-saturated by opening a connection to the larger container. When the two materials have different saturation pressures, then there will be a driving force for ammonia migration from the large container to the smaller - and partially of fully degassed - container. It also means that the energy that is put into the heated system during a period of degassing is partially recovered because the recharging may be done passively using a gradient in chemical potential of ammonia stored in a solid.

Accordingly, the invention relates to a method for storing ammonia and delivering ammonia as defined in claim 1.

Furthermore, the invention relates to a system for providing ammonia to an NOx removing device as defined in claim 5.

Accordingly, the present invention relates to a system and a method for ammonia storage and delivery which may e.g. be on-board where the storage capacity is divided into at least two containers.

The system of the present invention thus comprises:
a) a storage container with ammonia absorbed in a first storage material and
b) at least one other smaller storage container with ammonia absorbed in a second material and
c) heating means to heat the storage material in b) in order to raise the temperature of the material to reach a desired desorption pressure of ammonia thereby being able to release ammonia from the container to the desired ammoniaconsuming process and
d) means for connecting the two containers or compartments to reabsorb ammonia in the fully or partially degassed storage container (b) with ammonia desorbed from the container (a) and
e) heating means for the storage container in a) and
f) control means for carrying out the method of the invention;
   wherein the first and the second storage materials are the same materials.

The invention also relates to the method and system as mentioned above where the ammonia is used as reductant in selective catalytic reduction of NOx.

The invention also relates to systems and methods using the utilizing the storage and release of ammonia for or including NOx reduction in exhaust gases from combustion processes or engines.

Partial or full degassing of a smaller unit is reversed by ammonia migration from the larger container to the smaller unit.

### BREIF DESCRIPTION OF THE DRAWINGS

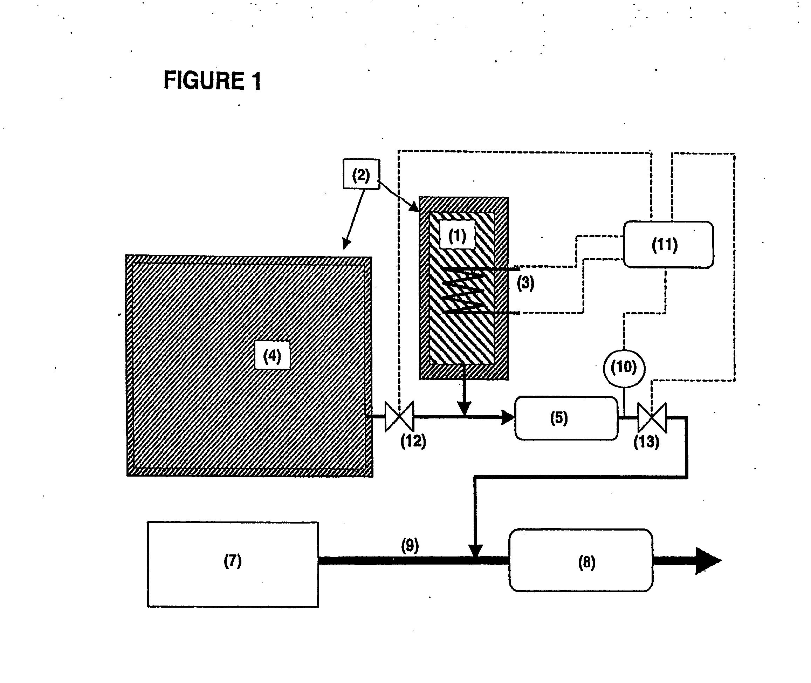

The invention is disclosed more in detail with reference to the drawings in which figures 1-3 shows three different embodiments of the invention where the total ammonia storage capacity is separated into two or more containers or compartments. Ammonia may be released from a least one unit, and at least one larger unit having means for heating (not shown) may be as a source for passive re-absorption of ammonia in the smaller unit that has means for heating.

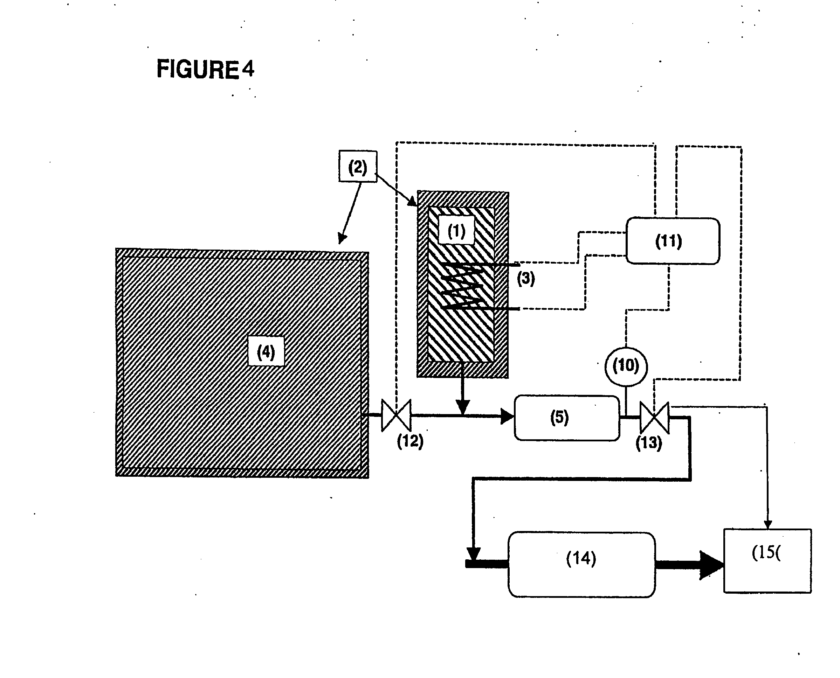

Figure 4 which is not according to the invention is similar to figure 1, except that it shows a fuel cell and an ammonia cracking catalyst instead of parts of an exhaust system of a combustion engine.

### DETAILED DESCRPITION OF EMBODIMENTS

The present invention is related to a method and system for ammonia storage and delivery that can e.g. be used for on-board storage and a delivery system for e.g. DeNOx by selective catalytic reduction using ammonia as the reductant. It may be used for other purposes requiring controlled dosing/delivery of ammonia from a compact storage unit.

One aspect of the invention is a method for storing ammonia and delivering ammonia as claimed in claim 1.

In the method of the invention, the fluid communication is interrupted while the second ammonia storage material is heated for desorption of ammonia, and the fluid communication is reassumed when the heating is stopped.

Another aspect of the invention is a system for ammonia storage and delivery as claimed in claim 5.

The storage containers contain ammonia stored as a metal ammine complex.

The two metal ammine salt ammonia storage materials which are the same materials may be chosen from the group of materials known as metal ammine complexes of the general formula: Mₐ(NH₃)ₙX_{z}, wherein M is one or more cations selected from alkali metals such as Li, Na, K or Cs, alkaline earth metals such as Mg, Ca or Sr, and/or transition metals such as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12.

Any re-absorption of ammonia in the larger container with the first storage material, which is kept at ambient temperature, is prevented either by a suitable one-way valve or a closed valve *during release of ammonia* by desorption from the heated container with the second storage material.

The container with the first ammonia storage material is equipped with means for heating in order to increase the difference in ammonia pressure during the re-absorption phase when the two containers are otherwise kept at ambient temperature.

The materials in the two containers are the same said method involving means for heating of the largest storage unit having the largest storage capacity of the two containers in order to increase the driving force for ammonia re-saturation.

The storage container containing the first storage material may be insulated in order to decrease the rate of passive heating of the material inside when the storage unit is placed in a warm environment, i.e. at temperatures above 40-50°C, in order to reduce the rate of building up an ammonia desorption pressure above the level at room temperature (298K).

In some embodiments the ammonia containing material may be compacted to *a unit, e.g.* a dense block, rod, cylinder ring or edged unit, such as cube, with a density above 75% of the theoretical maximum skeleton density of the saturated solid material in order to fit inside a given storage volume of a container.

The desorbed ammonia may be used in selective catalytic reduction of NOx in an oxygen-containing exhaust gas from a combustion process or engine.

Accordingly, in some embodiments of the method of the invention desorbed ammonia is delivered to a catalyst for a selective catalytic reduction of NOₓ in an oxygen-containing exhaust gas from a combustion process or engine.

The ammonia storage materials may have any or several of the features mentioned above.

The system for providing ammonia to a NOx removing system has control means for controlling said first and second delivery means for the at least two same storage materials capable of releasing ammonia by desorption.

The ammonia adsorbing/absorbing material is selected from complex ammine coordinated compounds such as alkaline ammine complexed salts.

A suitable device may comprise:
1. A main storage tank with a material capable of reversible ammonia storage (ad- and/or absorption/desorption). The material in could be Ca(NH₃)₈Cl₂ or Sr(NH₃)₈Cl₂ which at room temperature (298K) has a vapor pressure in the range of 0.1-1 bar. Using storage materials with a pressure below 1 bar at room temperature is preferred because of safety. The main tank comprises heating means for ammonia release. The overall capacity of the main tank should match the demand for a suitable long operating period/range if the unit is to be used as an ammonia delivery source for DeNOx, e.g. in cars. As an example, 3 - 5 kg ammonia stored for NOx reduction on a normal passenger car would result in an operating range of 15,000 to 40,000 km.
2. An operating storage unit containing a fully or partially saturated ammonia storage material that is the same as the storage material in the main tank. This could be Mg(NH₃)₆Cl₂. This material is placed in a container comprising heating means. This smaller tank has a capacity that covers any normal period/range of driving/operation before a longer period of parking/stopping takes place. Such a unit for a passenger car has a capacity for storing 50 g -1 kg ammonia but may be larger or smaller than that depending on the engine size and the desired operating range/period between parking/stopping. There may even be a second (possibly smaller) unit to ensure that at least one unit is always saturated. During driving/operation, the ammonia is degassed from the smaller unit by heating to obtain a suitable desorption pressure of ammonia to release ammonia into the exhaust line for NOx reduction by selective catalytic reduction.
3. An optional buffer volume between the storage unit and the dosing valve for the released ammonia in order to improve system control.
4. Furthermore, a dosing valve, a pressure sensor for measuring the operating pressure of the heated unit (item 2), a controller for controlling the power supply for thermal desorption of ammonia from the heated unit (item 2) which may be MgCl₂-based and for dosing the desired amount of ammonia may be provided. The controller controls opening means of the main storage tank during parking/stopping.
5. Suitable piping whereby the (at least two) containers are connected. The piping is equipped with valves (shut-off valves or suitable one-way valves) to be able to control the connection between the tanks and from the tanks to the ammonia consuming unit.

The operating principle in the above example is the following: The smaller unit with e.g. Mg(NH₃)₆Cl₂ (from item 2) is preferably built into the car as a fixed component that is never replaced. When the car has been on the road for a given period of time, e.g. a two-hour trip, the Mg(NH₃)₆Cl₂-unit has used a given amount of ammonia thus becoming Mg(NH₃)ₓCl₂ where x<6 when the car is left for parking. When the MgCl₂-based unit cools down to room temperature, the ammonia pressure in the Mg(NH₃)ₓCl₂-unit will drop to the desorption pressure of the material at room temperature. This will create a chemically generated vacuum. The saturated Mg(NH₃)₆Cl₂ has an ammonia pressure of approximately 2 mbar at room temperature. As a result, the smaller unit containing Mg(NH₃)ₓCl₂ where x<6 will pull ammonia from the storage material in the main tank and recharge the small MgCl₂-based unit. After a given amount recharging time, the MgCl₂-based unit is fully or partially refilled and ready for fast start-up and dosing.

After e.g. 15,000 to 40,000km of operation, the main storage tank can be replaced.

With the present invention, the system capacity can be scaled to an virtually "infinite" one: There is a base operational unit (item 2 above), which is designed to handle all normal driving situations and it is connected to the main tank. The main tank can - in principle - be of unlimited size. There is no technical barrier for making very large main-tanks to recharge the operational unit.

The in-situ recharging of the present invention also works at all ambient temperature levels. If there is a driving force between the two materials at room temperature, then there is also one of similar magnitude at e.g. -30°C.

The invention is now explained in more detail with reference to the drawings showing embodiments of the invention.

Reference is made to figures 1, 2 and 3, which show different embodiments of a system according to the present invention, wherein, however, the heating means for the main tank 4 is not shown.
Figure 1 shows an embodiment according to the following:
   A container 1 with the second storage material is in a container that is insulated 2. The container has heating means 3. When the material 1 is heated, ammonia is released into an optional buffer 5 and the pressure is detected by a pressure sensor 10. Ammonia is dosed through a dosing valve 13 into an exhaust line 9 coming from an engine or combustion process 7 and then the mixed gas enters a selective catalytic reduction catalyst 8 where NOx and ammonia is converted to harmless species.
   The ammonia release and dosing is controlled by a separate controller 11 or in a further embodiment by an engine control unit (ECU) (not shown) of a vehicle. The controller 11 controls energy supply to the heating element 3 of the container 1 according to the pressure of ammonia detected by the sensor 10.
   During release of ammonia from the container 1 (during driving), the valve 12 between the heated container 1 and the main storage tank 4 with heating means (not shown) containing the first ammonia storage material which is the same as the second ammonia storage material is closed. This avoids the re-absorption of ammonia into the main storage tank 4 from the container 1 during normal operation.
   During parking, the dosing valve 13 is closed and the valve 12 to the main storage tank 4 is opened. This will rapidly cool the heated unit since the heating 3 is terminated by the controller 11 during "parking" and the temporary endothermic desorption of ammonia will cool the warm container 1 to a lower temperature where the pressure is below atmospheric pressure. After this, ammonia will migrate from the material in the main tank 4 to the container 1 and recharge this unit so that it is ready for the next period of operation.
   When a next period of use is desired, the valve 12 is closed and heating 3 is turned on and when the pressure has reached a suitable level (i.e. above the pressure in the exhaust line), the dosing valve 13 is activated by the controller 11 according to demands defined by the engine operation or by the respective ammonia consumption unit.

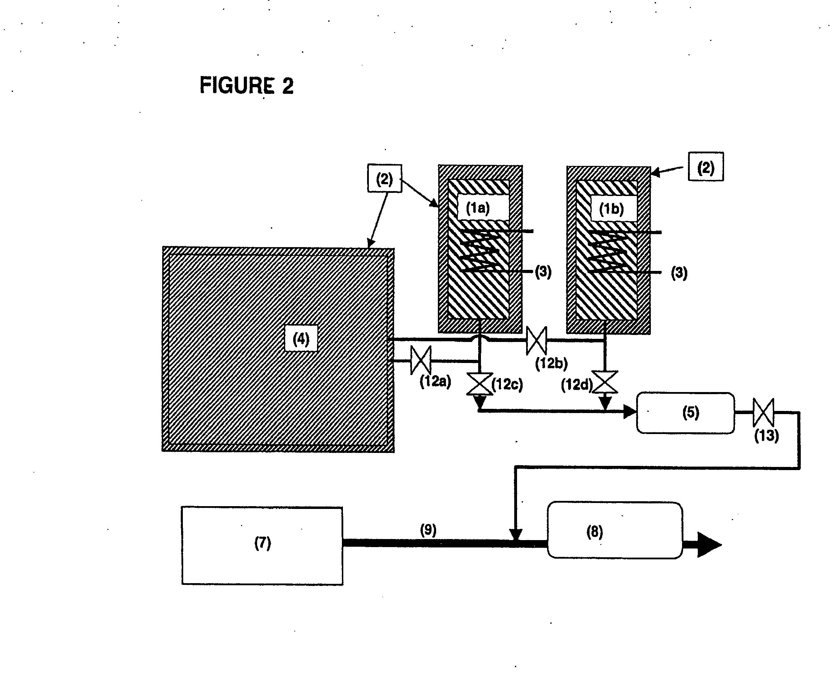

Figure 2 shows a further embodiment, similar to the system presented in figure 1. In the system of figure 2, there are two (identical, if desired) units for degassing - named 1a, 1b that are both capable of ammonia release by heating 3. This allows a system with an unlimited period of operation because one unit, e.g. 1a, is degassing while the other, 1b is recharged from the main storage tank 4. A suitable configuration of open/close valves 12a-d allows that e.g. unit 1a can degas to the exhaust line while the other 1b is recharged with ammonia from unit 4.
   - During degassing from container 1a , valves 12b and 12c are open and valves 12a and 12d are closed. Thereby ammonia is delivered from unit 4 to container 1b for recharging while container 1a degasses.
   - During degassing from container 1b, valves 12b and 12c are closed and valves 12a and 12d are open. Thereby ammonia is delivered from unit 4 to container 1a for recharging while container 1b degasses.

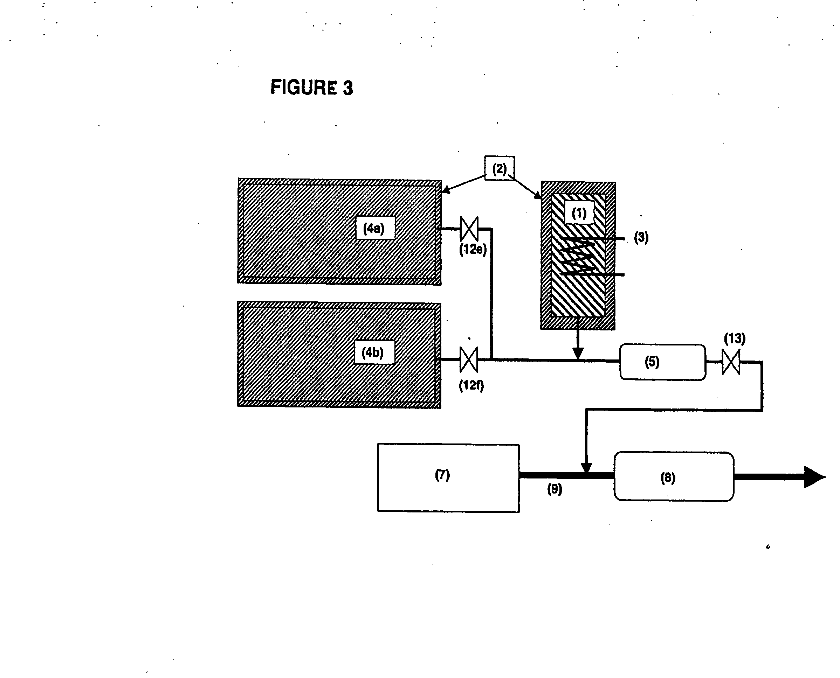

Figure 3 shows a further embodiment, similar to the systems presented in figure 1. This system is designed so that the total storage capacity of the first salt is distributed to different containers 4a and 4b. This allows for a modulation of the main storage tank arrangement. Two valves, 12e and 12f, ensures that the system controller can choose between the two (or potentially more) units for recharging the degassing unit 1.

The systems in figures 2 and 3 are shown without the controller 11 and the pressure sensor 10 (see figure 1) but both systems in figure 2 and 3 may also include a pressure sensor 10 and controller 11. Controlling may also be provided by the ECU of a vehicle.

The main storage container(s) 4; 4a, 4b shown in Figs. 1 through 3 comprise an insulation to maintain an operation temperature between -40°C and 70°C. An optional temperature control means (not shown) may also be provided to maintain the temperature of the storage material within the operational temperature range.

The heating means for the second storage containers 1; 1a, 1b may either be operated by an independent heating source (e.g. electrical) and/or by the waste heat from a combustion engine. The same applies to the temperature control means (not shown) of the first storage containers 4; 4a, 4b.

The valves 12; 12a to 12d; 12e, 12f and 13 may be of any type (e.g.: check valves, control valves, throttle valves, one-way valves) suitable to provide and to control the desired ammonia flow, either between the first and second storage containers 4; 4a, 4b and 1; 1a, 1b or from the second storage container 1; 1a, 1b to the ammonia consumption unit 8, 9 or to the buffer 5. Further pressure sensors 10 and/or flow detection means (not shown) may be provided to improve the control of the desired ammonia flow.

Figure 4 (not according to the invention) is similar to figure 1, except that it shows a fuel cell 15 and an ammonia cracking catalyst 14 instead of parts of an exhaust system of a combustion engine.

## Claims

1. A method for storing ammonia and delivering ammonia to an NOx removing device (8, 9) via dosing valve (13) by heating a second metal ammine salt ammonia storage material capable of absorbing and desorbing ammonia and having ammonia stored therein in a second storage container (1; 1 a, 1 b) provided with a heating element (3) thereby desorbing ammonia, wherein a first metal ammine salt ammonia storage material in a first storage container (4; 4a, 4b) larger than the second storage container (1; 1a, 1b), which is connected with the second storage container (1; 1a, 1b) via a line comprising a valve (12; 12a, 12b, 12e, 12f) closed during heating of the second ammonia storage material or a suitable one-way valve so as to prevent ammonia to be absorbed by the first storage material which is kept at ambient temperature, said first storage container (4; 4a, 4b) being larger than said second storage container (1;1a, 1b), is used as an ammonia source for the second ammonia storage material in the second storage container (1; 1 a, 1 b), when the second ammonia storage material in the second storage container (1, 1a, 1b) is ammonia-depleted by consumption, the heating has been stopped, and valve (12; 12a, 12b, 12e, 12f) is open so as to establish a fluid communication between the first ammonia storage container (4; 4a, 4b) and the second ammonia storage container (1; 1a, 1b), and wherein said first and second ammonia storage materials are the same materials and said first storage container (4; 4a, 4b) is provided with means for heating in order to increase the driving force for re-saturation of the second ammonia storage material when the latter is depleted of ammonia.

2. A method according to claim 1, wherein the metal ammine salt has the general formula:
Mₐ(NH₃)ₙX_{z},
wherein M is one or more cations selected from alkali metals such as Li, Na, K or Cs, alkaline earth metals such as Mg, Ca or Sr, and/or transition metals such,as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12.

3. A method according to claim 1 or 2, wherein the first and/or the second metal ammine salt ammonia storage material is compacted to a unit with a density of a above 75 % of the theoretical maximum skeleton density of the saturated metal ammine salt ammonia storage material.

4. A method according to any of claims 1 to 3, wherein the NOx removing device is a catalyst for a selective catalytic reduction of NOx in an oxygen-containing exhaust gas from a combustion process or engine.

5. A system for performing the method of any of claims 1 to 4, wherein said system provides ammonia to an NOx removing device (8, 9) and comprises
a first storage container (4; 4a, 4b) with a first metal ammine salt ammonia storage material;
a second storage container (1; 1 a, 1b) being smaller than the first storage container with a second metal ammine salt ammonia storage material, said second metal ammine salt storage material being the same as said first metal ammine salt storage material;
heating means for heating the first storage container (4; 4a, 4b) to increase the driving force for ammonia re-saturation of said second metal ammine salt ammonia storage material in said second storage container (1; 1a, 1 b); and
heating means (3) for heating the second storage material to release ammonia from the second storage container (1; 1a, 1b);
first means (5, 10, 13) for connecting the second storage container (1; 1a, 1b) to the ammonia consuming unit (8, 9); and
second means (12; 12a, 12b, 12c, 12d; 12e, 12f) for connecting the first storage container (4; 4a, 4b) to the second storage container (1; 1a, 1b), said second means including a valve (12; 12a, 12 b, 12e, 12f);
**characterized by** control means (11) programmed for and adapted to carry out the method of claim 1.

6. A system according to claim 5, wherein the first ammonia storage material and the second ammonia storage material have the features recited in claim 2.

7. A system according to claim 5 or 6, wherein the first ammonia storage material and/or the second ammonia storage material have the features recited in claim 3.

8. A system according to any of claims 5 to 7, wherein the first storage container (4; 4a, 4b) is insulated.

9. A system according to any of claims 5 to 8, wherein the NOx removing device is a catalyst for a selective catalytic reduction of NOₓ in an oxygen-containing exhaust gas from a combustion process or engine.

## Patentansprüche

1. Verfahren zur Speicherung und zur Lieferung von Ammoniak an eine NOx entfernende Vorrichtung (8,9) über ein Dosierventil (13) durch Erwärmen eines zweiten Metallamminsalz-Ammoniakspeichermaterials, das Ammoniak absorbieren und desorbieren kann und darin Ammoniak gespeichert aufweist, in einem zweiten Speicherbehälter (1; 1 a, 1 b), der mit einem Heizelement (3) versehen ist, wodurch Ammoniak desorbiert wird, bei dem ein erstes Metallamminsalz-Ammoniakspeichermaterial in einem größeren als der zweite Speicherbehälter (1; 1 a, 1 b) ersten Speicherbehälter (4; 4a, 4b), der mit dem zweiten Speicherbehälter (1; 1 a, 1 b) über eine Leitung verbunden ist, die ein Ventil (12; 12a, 12b, 12e, 12f), das während des Erwärmens des zweiten Ammoniakspeichermaterials geschlossen ist, oder ein geeignetes Einweg-Ventil umfasst, um zu verhindern, dass Ammoniak durch das erste Speichermaterial, das bei Raumtemperatur gehaltenen wird, absorbiert wird, wobei der erste Speicherbehälter (4; 4a, 4b), der größer ist als der zweite Speicherbehälter (1; 1 a, 1 b), als Ammoniakquelle für das zweite Ammoniakspeichermaterial in dem zweiten Speicherbehälter (1; 1 a, 1 b) verwendet wird, wenn das zweite Ammoniakspeichermaterial in dem zweiten Speicherbehälter (1; 1 a, 1 b) durch Verbrauch an Ammoniak abgereichert ist, das Erwärmen gestoppt worden ist und das Ventil (12; 12a, 12b, 12e, 12f) geöffnet ist, um eine Fluidkommunikation zwischen dem ersten Ammoniak-Speicherbehälter (4; 4a, 4b) und dem zweiten Ammoniak-Speicherbehälter (1; 1 a, 1 b) herzustellen, und wobei das erste und das zweite Ammoniakspeichermaterial die gleichen Materialien sind und der erste Speicherbehälter (4; 4a, 4b) mit Mitteln zum Erwärmen versehen ist, um die Triebkraft für die erneute Sättigung des zweiten Ammoniakspeichermaterials zu erhöhen, wenn das Letztgenannte an Ammoniak abgereichert ist.

2. Verfahren nach Anspruch 1, bei dem das Metallamminsalz die allgemeine Formel:
Mₐ(NH₃)ₙX_{z}
aufweist, in der M für ein oder mehrere Kationen steht, die aus Alkalimetallen, wie Li, Na, K oder Cs, Erdalkalimetallen, wie Mg, Ca oder Sr, und/oder Übergangsmetallen, wie V, Cr, Mn, Fe, Co, Ni, Cu oder Zn, oder deren Kombinationen, wie NaAl, KAl, K₂Zn, CsCu oder K₂Fe, ausgewählt sind, X für ein oder mehrere Anionen steht, die aus Fluorid-, Chlorid-, Bromid-, Iodid-, Nitrat-, Thiocyanat-, Sulfat-, Molybdat- und Phosphationen ausgewählt sind, a die Zahl der Kationen pro Salzmolekül ist, z die Zahl der Anionen pro Salzmolekül ist und n die Koordinationszahl von 2 bis 12 ist.

3. Verfahren nach Anspruch 1 oder 2, bei dem das erste und/oder das zweite Metallamminsalz-Ammoniakspeichermaterial zu einer Einheit mit einer Dichte von oberhalb 75 % der theoretischen maximalen Skelettdichte des gesättigten Metallamminsalz-Ammoniakspeichermaterials kompaktiert ist.

4. Verfahren nach einem der Ansprüche 1 bis 3, bei dem die NOₓ entfernende Vorrichtung ein Katalysator für eine selektive katalytische Reduktion von NOx in einem sauerstoffhaltigen Abgas aus einem Verbrennungsprozess oder einem Verbrennungsmotor ist.

5. System zur Durchführung des Verfahrens nach irgendeinem der Ansprüche 1 bis 4, bei dem das System Ammoniak an eine NOₓ entfernende Einheit (8, 9) liefert und umfasst:
einen ersten Speicherbehälter (4; 4a, 4b) mit einem ersten Metallamminsalz-Ammoniakspeichermaterial;
einen zweiten Speicherbehälter (1; 1 a, 1 b), der kleiner als der erste Speicherbehälter ist, mit einem zweiten Metallamminsalz-Ammoniakspeichermaterial, wobei das zweite Metallamminsalz-Speichermaterial das gleiche ist wie das erste Metallamminsalz-Speichermaterial;
Heizmittel zum Erwärmen des ersten Speicherbehälters (4; 4a, 4b), um die Triebkraft für die erneute Sättigung des zweiten Metallamminsalz-Ammoniakspeichermaterials in dem zweiten Speicherbehälter (1; 1 a, 1 b) mit Ammoniak zu erhöhen;
Heizmittel (3) zum Erwärmen des zweiten Speichermaterials zur Freisetzung von Ammoniak aus dem zweiten Speicherbehälter (1; 1 a, 1 b);
erste Mittel (5, 10, 13) zum Verbinden des zweiten Speicherbehälters (1; 1 a, 1 b) mit der Verbrauchereinheit (8, 9);
zweite Mittel (12; 12a, 12b, 12c, 12d; 12e, 12f) zum Verbinden des ersten Speicherbehälters (4; 4a, 4b) mit dem zweiten Speicherbehälter (1; 1 a, 1 b), wobei das zweite Mittel ein Ventil (12; 12a, 12b, 12e, 12f) umfasst;
**gekennzeichnet durch** Steuerungsmittel (11), die programmiert und angepasst sind, um das Verfahren von Anspruch 1 durchzuführen.

6. System nach Anspruch 5, bei dem das erste Ammoniakspeichermaterial und das zweite Ammoniakspeichermaterial die Merkmale aufweisen, die in Anspruch 2 angegeben sind.

7. System nach Anspruch 5 oder 6, bei dem das erste Ammoniakspeichermaterial und/oder das zweite Ammoniakspeichermaterial die Merkmale aufweisen, die in Anspruch 3 angegeben sind.

8. System nach irgendeinem der Ansprüche 5 bis 7, bei dem der erste Speicherbehälter (4; 4a, 4b) isoliert ist.

9. System nach irgendeinem der Ansprüche 5 bis 8, bei dem die NOₓ entfernende Vorrichtung ein Katalysator für eine selektive katalytische Reduktion von NOₓ in einem sauerstoffhaltigen Abgas eines Verbrennungsprozesses oder eines Verbrennungsmotors ist.

## Revendications

1. Procédé pour stocker de l'ammoniac et délivrer de l'ammoniac à un dispositif de retrait de NOx (8, 9) par l'intermédiaire d'une soupape de dosage (13) en chauffant un deuxième matériau de stockage d'ammoniac à base de sel d'amine métallique capable d'absorber et de désorber l'ammoniac et dans lequel de l'ammoniac est stocké dans un deuxième contenant de stockage (1 ; 1a, 1b) pourvu d'un élément chauffant (3) désorbant de ce fait l'ammoniac, dans lequel un premier matériau de stockage d'ammoniac à base de sel d'amine métallique dans un premier contenant de stockage (4 ; 4a, 4b) plus grand que le deuxième contenant de stockage (1 ; 1a, 1b), qui est relié au deuxième contenant de stockage (1 ; 1a, 1b) par l'intermédiaire d'une conduite comprenant une soupape (12 ; 12a, 12b, 12e, 12f) fermée pendant le chauffage du deuxième matériau de stockage d'ammoniac ou une soupape unidirectionnelle appropriée de manière à éviter que l'ammoniac soit absorbé par le premier matériau de stockage qui est maintenu à température ambiante, ledit premier contenant de stockage (4 ; 4a, 4b) étant plus grand que ledit deuxième contenant de stockage (1 ; 1a, 1b), est utilisé en tant que source d'ammoniac pour le deuxième matériau de stockage d'ammoniac dans le deuxième contenant de stockage (1 ; 1a, 1b), lorsque le deuxième matériau de stockage d'ammoniac dans le deuxième contenant de stockage (1 ; 1a, 1b) est appauvri en ammoniac par consommation, le chauffage a été arrêté, et la soupape (12 ; 12a, 12b, 12e, 12f) est ouverte de manière à établir une communication fluidique entre le premier contenant de stockage d'ammoniac (4 ; 4a, 4b) et le deuxième contenant de stockage d'ammoniac (1 ; 1a, 1b), et dans lequel lesdits premier et deuxième matériaux de stockage d'ammoniac sont des matériaux identiques et ledit premier contenant de stockage (4 ; 4a, 4b) est pourvu de moyens de chauffage afin d'augmenter la force d'entraînement pour la resaturation du deuxième matériau de stockage d'ammoniac lorsque ce dernier est appauvri en ammoniac.

2. Procédé selon la revendication 1, dans lequel le sel d'amine métallique a la formule générale :
Ma(NH₃)ₙX_{z},
où M est un ou plusieurs cations sélectionnés parmi des métaux alcalins tels que Li, NA, K ou Cs, des métaux alcalino-terreux tels que Mg, Ca ou Sr, et/ou des métaux de transition tels que V, Cr, Mn, Fe, Co, Ni, Cu, ou Zn, ou des combinaisons de ceux-ci telles que NaAl, KAl, K₂Zn, CsCu, ou K₂Fe, X est un ou plusieurs anions sélectionnés parmi des ions fluorures, chlorures, bromures, iodures, nitrates, thiocyanates, sulfates, molybdates et phosphates, a est le nombre de cations par molécule de sel, z est le nombre d'anions par molécule de sel, et n est le nombre de coordination de 2 à 12.

3. Procédé selon la revendication 1 ou 2, dans lequel les premier et/ou deuxième matériaux de stockage d'ammoniac à base de sel d'amine métallique sont compactés en une unité avec une densité de a supérieure à 75 % de la densité de structure maximum théorique du matériau de stockage d'ammoniac à base de sel d'amine métallique saturé.

4. Procédé selon l'une quelconque des revendications 1 à 3, dans lequel le dispositif de retrait de NOx est un catalyseur pour une réduction catalytique sélective des NOx dans un gaz d'échappement contenant de l'oxygène provenant d'un processus de combustion ou d'un moteur à combustion.

5. Système pour mettre en oeuvre le procédé selon l'une quelconque des revendications 1 à 4, dans lequel ledit système fournit de l'ammoniac à un dispositif de retrait de NOx (8, 9) et comprend :
un premier contenant de stockage (4 ; 4a, 4b) avec un premier matériau de stockage d'ammoniac à base de sel d'amine métallique ;
un deuxième contenant de stockage (1 ; 1a, 1b) plus petit que le premier contenant de stockage avec un deuxième matériau de stockage d'ammoniac à base de sel d'amine métallique, ledit deuxième matériau de stockage à base de sel d'amine métallique étant identique au dit premier matériau de stockage à base de sel d'amine métallique ;
des moyens de chauffage pour chauffer le premier contenant de stockage (4 ; 4a, 4b) pour augmenter la force d'entraînement pour la resaturation en ammoniac dudit deuxième matériau de stockage d'ammoniac à base de sel d'amine métallique dans ledit deuxième contenant de stockage (1 ; 1a, 1b) ; et
des moyens de chauffage (3) pour chauffer le deuxième matériau de stockage pour libérer l'ammoniac du deuxième contenant de stockage (1 ; la, 1b) ;
des premiers moyens (5, 10, 13) pour relier le deuxième contenant de stockage (1 ; 1a, 1b) à l'unité de consommation d'ammoniac (8, 9) ; et
des deuxièmes moyens (12 ; 12a, 12b, 12c, 12d, 12e, 12f) pour relier le premier contenant de stockage (4 ; 4a, 4b) au deuxième contenant de stockage (1 ; la, 1b), lesdits deuxièmes moyens comprenant une soupape (12 ; 12a, 12b, 12e, 12f) ;
**caractérisé par** des moyens de commande (11) programmés et conçus pour mettre en oeuvre le procédé selon la revendication 1.

6. Système selon la revendication 5, dans lequel le premier matériau de stockage d'ammoniac et le deuxième matériau de stockage d'ammoniac présentent les caractéristiques énumérées dans la revendication 2.

7. Système selon la revendication 5 ou 6, dans lequel le premier matériau de stockage d'ammoniac et/ou le deuxième matériau de stockage d'ammoniac présentent les caractéristiques énumérées dans la revendication 3.

8. Système selon l'une quelconque des revendications 5 à 7, dans lequel le premier contenant de stockage (4 ; 4a, 4b) est isolé.

9. Système selon l'une quelconque des revendications 5 à 8, dans lequel le dispositif de retrait de NOx est un catalyseur pour une réduction catalytique sélective des NOx dans un gaz d'échappement contenant de l'oxygène provenant d'un processus de combustion ou d'un moteur à combustion.
